# EUROPÄISCHE PATENTSCHRIFT

(11) **EP 1 397 664 B1**
(45) Veröffentlichungstag und Bekanntmachung des Hinweises auf die Patenterteilung: **11.11.2009**
(21) Anmeldenummer: 02732738.6
(22) Anmeldetag: 24.05.2002
(51) Int. Cl.: G01N 15/02, G01N 21/65

(54) **TRÄGERSUBSTRAT FÜR DIE ABSCHEIDUNG, AUTOMATISCHE ERKENNUNG UND SPEKTROSKOPISCHE IDENTIFIZIERUNG VON PARTIKELN**
SUPPORTING SUBSTRATE USED FOR THE DEPOSITION, AUTOMATED RECOGNITION AND SPECTROSCOPIC IDENTIFICATION OF PARTICLES
SUBSTRAT SUPPORT CONÇU POUR LA SEPARATION, LA RECONNAISSANCE AUTOMATIQUE ET L'IDENTIFICATION SPECTROSCOPIQUE DE PARTICULES

(30) Priorität: 31.05.2001 DE 10127537
(43) Veröffentlichungstag der Anmeldung: 17.03.2004
(73) Patentinhaber: RAP.ID PARTICLE SYSTEMS GMBH, 12459 Berlin (DE)
(72) Erfinder: HOLZ, Lothar, 12557 Berlin (DE); VALET, Oliver, 10243 Berlin (DE); LANKERS, Markus, 10551 Berlin (DE)
(74) Vertreter: Eisenführ, Speiser & Partner
(86) Internationale Anmeldenummer: PCT/EP2002/005769
(87) Internationale Veröffentlichungsnummer: WO 2002/097400

(56) Entgegenhaltungen:
- WO-A-00/08445
- DE-C- 19 946 110
- DATABASE INSPEC [Online] INSTITUTE OF ELECTRICAL ENGINEERS, STEVENAGE, GB; SUTHERLAND W S ET AL: "Preparation of substrates for surface-enhanced Raman microprobe spectroscopy" Database accession no. 4042085 XP002212000 & JOURNAL OF RAMAN SPECTROSCOPY, OCT. 1991, UK, Bd. 22, Nr. 10, Seiten 541-549, ISSN: 0377-0486
- VO-DINH T: "Surface-enhanced Raman spectroscopy using metallic nanostructures" TRAC, TRENDS IN ANALYTICAL CHEMISTRY, ANALYTICAL CHEMISTRY. CAMBRIDGE, GB, Bd. 17, Nr. 8-9, 9. August 1998 (1998-08-09), Seiten 557-582, XP004146617 ISSN: 0165-9936
- MILLIPORE : "Millipore Particle Monitoring Guide" WWW.MILLIPORE.COM, [Online] 1998, XP002211999 Gefunden im Internet: <URL:http://www.millipore.com/publications .nsf/dda0cb48c91c0fb6852567430063b5d6/b76a 969e6d73cbd5852568c5006434c9/$FILE/ATTKZK5 J/ADO30.pdf> [gefunden am 2002-09-02] in der Anmeldung erwähnt

## Beschreibung

Die vorliegende Erfindung betrifft ein Trägersubstrat für die Abscheidung, automatisierte Erkennung und spektroskopische Identifizierung von Partikeln, insbesondere partikulären Verunreinigungen und insbesondere zur Anwendung mit der Raman-Spektroskopie.

Zur Abscheidung von festen partikulären Verunreinigungen aus der Luft oder Flüssigkeiten sind unterschiedliche Methoden bekannt. Die einfachsten Verfahren beruhen auf der Abscheidung der Partikel auf Filtermembranen sowohl in gasförmigen als auch flüssigen Medien mit nachfolgender Analyse mittels geeigneter Verfahren, wie Lichtmikroskopie, Rasterelektronenmikroskopie oder gravimetrische Analyse (siehe z.B. Millipore Particle Monitoring Guide, Millipore Corporation, 1998).

Die Filtermembranen bestehen meistens aus polymeren Materialien, wie z.B. Nitrozellulose, Nylon, FTFE oder PVC, mit exakt definierter Porengröße, wobei sich die Partikel mit größerem Durchmesser als die Porenweite des Filters auf diesem sammeln und nachfolgend analysiert werden können. In neuester Zeit ist für viele Anwendungen im Bereich der Mikroelektronik die Ermittlung und Analyse von besonders kleinen Partikeln, sogenannten Mikropartikeln im Größenbereich von etwa 10 µm oder kleiner, von besonderem Interesse, deren effektive Analyse aufgrund der Größenverhältnisse der zu analysierenden Partikel mit den bisher bekannten Verfahren problematisch ist.

Es sind auch metallische Filter bekannt, wie zum Beispiel metallische Filter aus Silber zur Filtration von der Fa. Millipore, die jedoch aufgrund ihres Herstellungsverfahrens eine Oberfläche besitzen, die aufgrund Ihrer Rauhigkeit nicht zur Erkennung oder Identifizierung von einzelnen Partikeln < 5µm geeignet ist. Die Fa. alto tec GmbH, Hamburg bietet goldbeschichtete Filter für Bestimmung von Asbestkonzentrationen an, die ebenfalls nicht für die beschriebene Anwendung optimiert sind.

Für die quantitative Kontaminationsanalyse von glatten Oberflächen existieren Techniken, die mit Hilfe eines Laserstrahls und eines Laserscanners Oberflächen abrastern und Abweichungen von der Ebene anhand des mit einem Photodetektor aufgefangenen Streulichts erkennen. Ein solches Verfahren ist in dem US-Patent 5,479,252 angegeben. Eine chemische Charakterisierung der Partikel kann mit diesem Verfahren jedoch nicht durchgeführt werden.

Andere Verfahren, wie z.B. im US-Patent 6,178,383 angegeben, untersuchen digital vorliegende Videobilder mit Bilderkennungsprogrammen und können neben der Erkennung von partikulären Verunreinigungen auch Aussagen über deren Form und/oder Größe machen. Die Ausrüstung für derartige Verfahren ist allerdings gegenüber der Lasertechnologie sehr teuer, auch ist eine Identifizierung der Partikel mit diesem Verfahren nicht möglich. Die Auflösung dieser Verfahren ist zwar theoretisch nur beugungsbegrenzt, jedoch ist es schwierig, die Größe von Partikeln zu bestimmen, die kleiner als 1,5 µm sind

Für die qualitative und quantitative Analyse der Zusammensetzung einer Probe, insbesondere von Mikropartikeln, sind Verfahren der Raman-Spektroskopie bekannt (M. Lankers, J. Popp, G. Rössling and W. Kiefer, Chem. Phys. Let. 277 (1997) 331-334) und haben sich als vorteilhaft erwiesen. Dabei wird eine Probe mit intensiver elektromagnetischer monochromatischer Strahlung, beispielsweise Laserlicht, bestrahlt. Dazu wird üblicherweise elektromagnetische Strahlung aus dem sichtbaren oder ultravioletten Spektralbereich verwendet. Bei der Messung des gestreuten Lichtes mit einem Spektrometer und einem entsprechenden Detektor, d.h., bei der Bestimmung der Strahlintensität des gestreuten Lichtes als Funktion der Wellenlänge, erhält man ein Spektrum, das aus einer starken Linie, der sogenannten Erregerlinie, und sehr viel schwächeren Linien, den sogenannten Raman-Linien besteht. Die Erregerlinie weist dieselbe Wellenzahl auf wie die einfallende Strahlung. Die Ramanlinien entsprechen jeweils spezifischen Rotations- oder Schwingungszuständen der zu untersuchenden Substanz. Die Raman-Linien sind auf einer Wellenzahlskala gegenüber der Erregerlinie symmetrisch angeordnet. Weiterhin weisen die Raman-Linien eine 10⁻³ bis 10⁻⁴ fach kleinere Intensität auf, wobei die Intensitäten der Raman-Linien auf der niederfrequenten Seite gegenüber denen auf der der höherfrequenten Seite üblicherweise bei Raumtemperatur wesentlich größer sind.

Das Raman-Spektrum, d.h. die Sequenzen der Raman-Linien sind für jede Substanz charakteristisch. Eine Verbindung kann durch Vergleich ihres Spektrums mit den Spektren bekannter Verbindungen identifiziert werden.

Problematisch erweist sich bei der Verwendung der Raman-Spektroskopie allerdings ihr geringer Wirkungsgrad. Für die Untersuchung geringer Substanzmengen, wie dies bei der Untersuchung von Mikropartikeln der Fall ist, müssen sehr hohe Laserleistungen eingesetzt werden. Dabei ist es ungünstig, daß der Fokus des Laserstrahls meist deutlich größer als der Durchmesser des Partikels ist. Somit ist unerwünschte Folge, dass gleichzeitig das Signal des Trägersubstrats aufgezeichnet und dabei leicht das Spektrum des Partikels überdeckt wird. Dies wird aus den Flächenverhältnissen deutlich. Wird ein Fokus von ca. 10 µm Durchmesser verwendet, um ein Partikel mit einem Durchmesser von 1 µm zu untersuchen, ergibt sich ein Trägersubstrat/Partikelsignal-Verhältnis von ca. 100:1. Dies macht in den meisten Fällen eine Charakterisierung des Partikels unmöglich. Eine Lösung des Problems kann in einigen Fällen durch eine Fokussierung des Laserstrahls auf 1 µm erreicht werden. Hierbei steigt allerdings die Energiedichte stark an und führt zu einer Beschädigung oder Veränderung infolge von Verbrennung oder photochemischer Reaktionen empfindlicher Substanzen.

Um eine zuverlässige Identifizierung von Partikeln auf Filtermembranen mit Ramanspektroskopie zu ermöglichen, ist es bekannt, die Filtermembran mit einer Metallschicht, wie zum Beispiel Silber oder Gold, zu versehen (Database Inspec [Online] Institute of electrical Engineers, Stevenage, GB; Sutherland W.S. et al.: "Preparation of substrates for surface-enhanced Raman microprobe spectroskopy" XP00221200 Database accession no. 404285; Vo-Dinh T.: "Surface-enhanced Raman spectroscopy using metallic nanostructures" Trac, Trends in Analytical Chemistry, Analytical Chemistry, Cambridge, GB, Bd. 17, Nr. 8-9, 9. August 1998 (1998-08-09), Seiten 557-582, XP004146617 ISSN: 0165-9936). Um brauchbare Analysenergebnisse zu erhalten, muss jedoch das Ramansignal verstärkt werden. Die offenbarten Trägersubstrate mit einer Silberbeschichtung nutzen deshalb den sogenannten SERS (Surface-Enhanced Raman Scattering)-Effekt, um ein verstärktes Ramansignal zu erhalten. Um den SERS-Effekt zu verstärken, werden im gewählten Wellenlängenbereich spektroskopisch verstärkende Metalle ausgewählt. Der SERS-Effekt wird durch eine raue Oberflächenbeschaffenheit unterstützt.

MILLIPORE: "Millipore Particle Monitoring Guide", 1998, URL:http://www.millipore.com/publications, offenbart Membranfilter und Zellulosefilter, auf denen Partikel in gasförmigen und flüssigen Medien abgeschieden werden können. Eine Bedampfung von Cellulosefiltern führt aufgrund der Tiefenstruktur jedoch ebenfalls zu einem SERS-Effekt.

SERS-aktive Strukturen altern und führen so zu einer Veränderung des resultierenden Raman-Spektrums, das eine Identifizierung der Substanz erschwert oder unmöglich macht.

Die direkte Nutzung von SERS bzw. versehentlich hervorgerufener SERS-Effekte führt zu einer selektiven Verstärkung des Signals bestimmter Moleküle bzw. Molekülteile, die eine Analyse einer unbekannten Substanz oder eines Substanzgemisches erschwert oder verhindert.

Aufgabe der vorliegenden Erfindung ist es deshalb, Trägersubstrate für die spektroskopische Analyse von Partikeln, vorzugsweise die Raman-Spektroskopie, zur Verfügung zu stellen, die die obengenannten Nachteile, insbesondere bei der Analyse von Mikropartikeln, soweit reduzieren, dass verlässliche Analysenergebnisse erhalten werden und die darüberhinaus für die Filtration sowohl flüssiger als auch gasförmiger Medien geeignet sind.

Die Aufgabe wird erfindungsgemäß gelöst durch ein Trägersubstrat für die Abscheidung, automatisierte Erkennung und spektroskopische Identifizierung von partikulären Verunreinigungen in flüssigen oder gasförmigen Medien, bestehend aus einer Filtermembran aus polymeren Materialien mit einer definierten Porenweite, wobei die Oberfläche der Filtermembran mit Metall beschichtet ist, das im gewählten Wellenlängenbereich für die spektroskopische Identifizierung keine spektralen Merkmale aufweist und bei der gewählten Anregungswellenlänge keine oder nur wenig der eingestrahlten Laserenergie absorbiert, und eine sehr glatte Struktur aufweist.

Dadurch wird es möglich, auch partikuläre Verunreinigungen im Mikrobereich insbesondere von etwa 1 bis 10 µm mittels spektroskopischer Analyse, insbesondere Raman-Spektroskopie, zuverlässig zu identifizieren und nahezu unverfälschte Analysenergebnisse zu erhalten. Eine Fokussierung des Laserstrahles auf den Partikeldurchmesser und damit eine starke Erhöhung der Energiedichte mit den unerwünschten Folgen der Beschädigung oder Veränderung des Trägersubstrates und/oder des analysierenden Partikels ist nicht mehr erforderlich, wodurch die Anwendungsbreite der Raman-Spektroskopie erweitert wird und zuverlässige Analysen erhalten werden. Die Beschichtung mit einer dünnen Metallschicht erlaubt die kostengünstige Herstellung von Trägersubstraten, wobei die vorteilhaften Eigenschaften der Metalle für die gewählten Wellenlängenbereiche erhalten bleiben. Die metallbeschichteten Membranen erlauben verschiedene Porengrößen oder -weiten und sind zur Abscheidung der Partikel sowohl aus gasförmigen als auch flüssigen Medien geeignet.

Dadurch, dass die Metallschicht im gewählten Anregungswellenlängenbereich keine oder nur wenig der eingestrahlten Laserenergie absorbiert, wird die Zerstörung der Beschichtung und/oder des zu analysierenden Partikels vermieden. Beispielsweise können goldbeschichtete Filter nicht zur Untersuchung von Partikeln im nahinfraroten Bereich (700-1070 nm) eingesetzt werden. Es werden zur Untersuchung der Teilchen Leistungsdichten von ca. 80 kW/cm² benötigt. Die Goldschichten weisen in diesem Bereich jedoch nur eine Belastbarkeit von weniger als 1 kW/cm² auf. Im übrigen Spektralbereich sind goldbeschichtete Filter jedoch einsetzbar. Ein weiteres Beispiel stellt eine Silberbeschichtung dar. Hier sind keine Untersuchungen im Bereich 350 - 500 nm mit 80 kW/cm² möglich. Aluminium ist in einem Spektralbereich von 240 - 280 nm nicht anwendbar.

Es werden Filtermembranen mit sehr glatter Oberfläche (Rauheit RMS<1µm) verwendet, wie z.B. Polycarbonat-, Teflon- oder Celluloseacetatmembranen, mit definierten Poren von beispielsweise 0,2; 0,8 oder 1,2 µm.

Die metallische Schicht besteht beispielsweise aus Ni, Al, Pd, Pt, W, Fe, Ta, Rh, Cd, Cu, Au, Ag, In, Co, Sn, Si, Ge, Te, Se oder einer Legierung dieser Metalle. Die Dicke der Beschichtung liegt vorzugsweise zwischen 50 und 200 nm.

Die erfindungsgemäßen Trägersubstrate sind insbesondere für die Raman-Spektroskopie geeignet, aber auch für andere Spektralanalyseverfahren.

Die Erfindung wird nachfolgend anhand von Ausführungsbeispielen unter Bezugnahme auf die beigefügten Zeichnungen näher erläutert.
- Fig. 1: zeigt das Ramanspektrum von Polystyrolkugeln auf einem unbeschich- teten Polycarbonatfilter;
- Fig. 2: zeigt das Ramanspektrum von Polystyrolkugeln auf einem erfindungs- gemäß beschichteten Polycarbonatfilter.

Für das Experiment wird Laser mit einer Wellenlänge von 785 nm benutzt, vorzugsweise TuiOptik Laser. Das Laserlicht wird mit Hilfe eines Spiegels in ein Mikroskop eingekoppelt und mit einem Objektiv, vorzugsweise ein Nikon ULWD 40 Objektiv, auf die Partikel fokussiert. Das rückgestreute Licht wird durch dasselbe Objektiv gesammelt, in eine Faser eingekoppelt und die Erregerwellenlänge mit einem Notch-Filter, vorzugsweise einem Supernotch-Filter (Kaiser Optical), herausgefiltert. Schließlich wird das inelastisch gestreute Licht in einem Spektrometer, vorzugsweise einem Acton Spektrometer, spektral aufgespalten und die Ramanlinien mit einem Detektor, z.B. einer Backthinned-CCD-Kamera, aufgezeichnet.

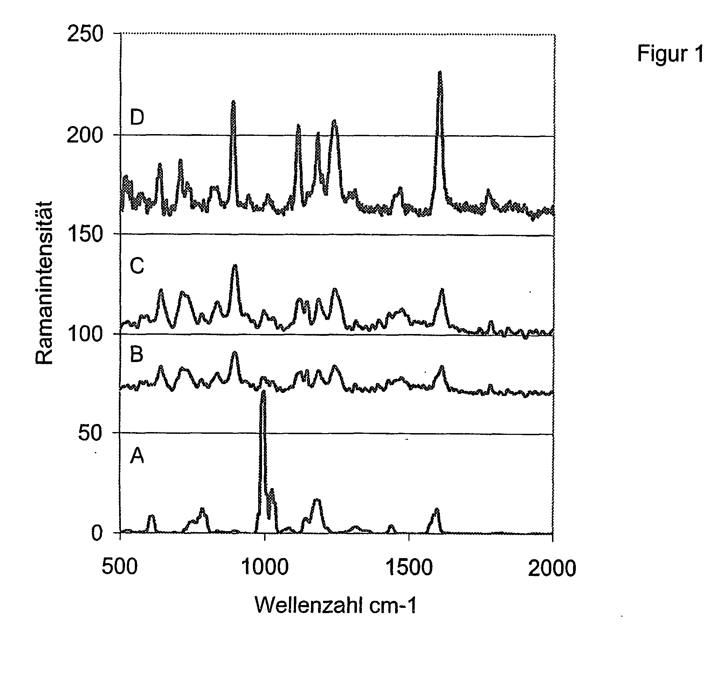

In Abb. 1A bzw. 1D sind die Reinspektren von Polystyrol, dem zu analysierende Partikel, und Polycarbonat, der Filtermembran, dargestellt. In Abb. 1B ist das Spektrum einer Polystyrolkugel mit einem Durchmesser von 3 µm dargestellt, die auf einer unbeschichteten Polycarbonatmembran liegt. Der Fokus des Laserstrahls, mit dem diese Untersuchung durchgeführt wurde, hat einen Durchmesser von ca. 10 µm. Es sind praktisch nur spektrale Merkmale des Filtermaterials zu erkennen, eine Identifizierung des zu analysierenden Materials ist praktisch unmöglich (vgl. 1A, 1D). In Abb. 1C ist das Spektrum des gleichen Partikels bei Bestrahlung mit einem schmalen Laserfokus von ca. 1 µm dargestellt. Die spektralen Anteile der Polystyrolkugel sind nun schwach zu erkennen. Das Gesamtspektrum wird jedoch weiterhin stark von den Merkmalen des Filtermaterials dominiert.

Für das folgende Vergleichsbeispiel wird ein Polycarbonatfilter von 25 mm Durchmesser und einem Porendurchmesser von 0.8 µm verwendet, der erfindungsgemäß mit Aluminium in einer Schichtdicke von 100 nm bedampft ist.

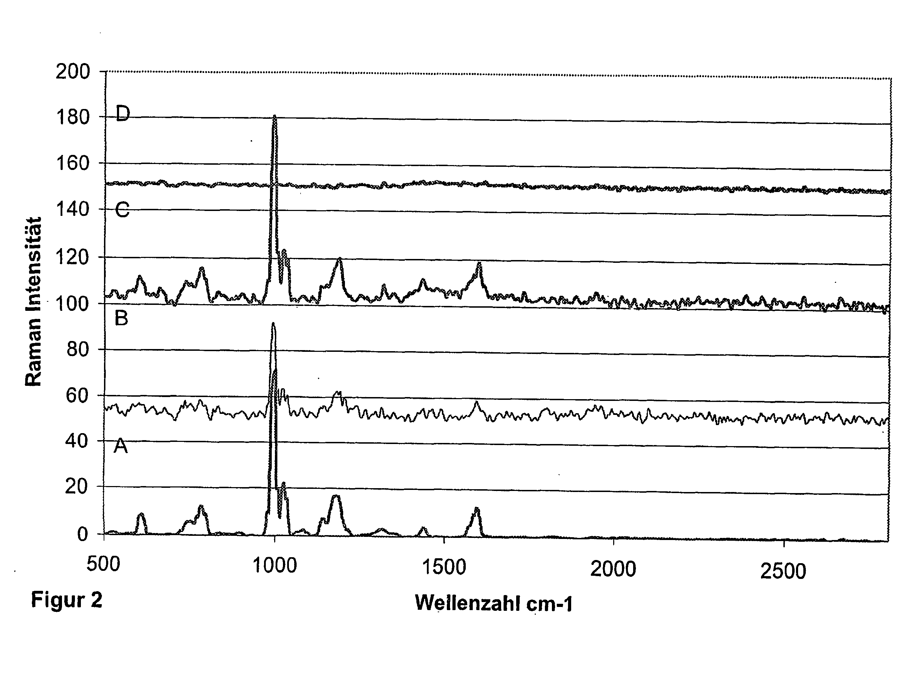

Im Vergleich zu den oben dargestellten Spektren ist in Fig. 2D das Spektrum von reinem Polystyrol und der Aluminiumbeschichtung dargestellt. Das Spektrum des beschichteten Filters weist keinerlei Struktur auf. Das Spektrum der Polystyrolkugel mit einem Durchmesser von 3 µm, beleuchtet mit einem 1.0 µm Laserfokus, aber auf einem aluminiumbedampften Filter, ist in Abb. 2B zu sehen. Es sind keinerlei verfälschende Banden des Polycarbonats zu erkennen. Die wesentlichen spektralen Merkmale des zu analysierenden Partikels sind zu sehen, so dass eine eindeutige Identifizierung möglich wird. Der gleiche Effekt lässt sich auch für die Analyse des Partikels mit einem Fokus von 1 µm beobachten, siehe Abb. 2C. Die meisten spektralen Merkmale des Vergleichsspektrums lassen sich hier wiederfinden.

Das Beispiel macht deutlich, dass eine Identifizierung von kleinen Partikeln durch Ramanspektroskopie auf handelsüblichen Filtermembranen mit Laserfoki im Bereich von 2-10 µm nicht möglich ist. Eine deutliche Verbesserung der Identifizierung wird mit den erfindungsgemäß beschichteten Filtermembranen erreicht.

## Patentansprüche

1. Trägersubstrat für die Abscheidung, automatisierte Erkennung und spektroskopische Identifizierung von partikulären Verunreinigungen in flüssigen oder gasförmigen Medien, bestehend aus einer Filtermembran aus polymeren Materialien mit einer definierten Porenweite, wobei die Oberfläche der Filtermembran mit einer Schicht aus Metall versehen ist, **dadurch gekennzeichnet, dass** das Metall aus einer Gruppe von Metallen ausgewählt wird, die im gewählten Wellenlängenbereich für die spektroskopische Identifizierung keine spektralen Merkmale aufweisen und bei der gewählten Anregungswellenlänge keine oder nur wenig der eingestrahlten- Laserenergie absorbieren, die Schichtdicke ungefähr 50 bis 200 nm beträgt und die Schicht eine sehr glatte Struktur mit einer Rauheit < 1 µm besitzt.

2. Trägersubstrat nach Anspruch 1, **dadurch gekennzeichnet, dass** die metallische Schicht aus Ni, Al, Pd, Pt, W, Fe, Ta, Rh, Cd, Cu, Au, Ag, In, Co, Sn, Si, Ge, Te, Se oder einer Legierung dieser Metalle besteht.

3. Trägersubstrat nach Anspruch 1 oder 2, **dadurch gekennzeichnet, dass** die metallische Schicht aufgedampft ist.

4. Trägersubstrat nach einem oder mehreren der vorhergehenden Ansprüche **dadurch gekennzeichnet, dass** die Filtermembran aus Polycarbonat, Teflon oder Celluloseacetat besteht.

5. Trägersubstrat nach einem oder mehreren der vorhergehenden Ansprüche, **dadurch gekennzeichnet, dass** die Filtermembran eine definierte Porenweite von etwa 0,2 bis 1,2 µm besitzt.

6. Trägersubstrat nach einem oder mehreren der vorhergehenden Ansprüche, **dadurch gekennzeichnet, dass** die spektroskopische Identifizierung durch Raman-Spektroskopie erfolgt.

## Claims

1. Carrier substrate for the precipitation, automated recognition and spectroscopic identification of particulate impurities in liquid or gaseous media, consisting of a filter membrane made of polymeric materials having a defined pore size, wherein the surface of the filter membrane is provided with a coating of metal, **characterised in that** the metal is selected from a group of metals which have no spectral features in the wavelength range selected for the spectroscopic identification and at the chosen excitation wavelength absorb none or only a small amount of the irradiated laser energy, the thickness of the coating is approximately 50 to 200 nm and the coating has a very smooth structure with a roughness of <1µm.

2. Carrier substrate according to claim 1, **characterised in that** the metallic coating consists ofNi, Al, Pd, Pt, W, Fe, Ta, Rh, Cd, Cu, Au, Ag, In, Co, Sn, Si, Ge, Te, Se or an alloy of these metals.

3. Carrier substrate according to claim 1 or 2, **characterised in that** the metal coating is applied by vapour deposition.

4. Carrier substrate according to one or more of the preceding claims, **characterised in that** the filter membrane consists of polycarbonate, Teflon or cellulose acetate.

5. Carrier substrate according to one or more of the preceding claims, **characterised in that** the filter membrane has a defined pore size of about 0.2 to 1.2 µm.

6. Carrier substrate according to one or more of the preceding claims, **characterised in that** the spectroscopic identification is carried out by Raman spectroscopy.

## Revendications

1. Substrat support pour le dépôt, la reconnaissance automatique et l'identification spectroscopique d'impuretés sous forme de particules dans des milieux liquides ou gazeux, constitué d'une membrane filtrante en matériaux polymères ayant une dimension de pores définie, la surface de la membrane filtrante étant munie d'une couche en métal, **caractérisé en ce que** le métal est choisi dans un groupe de métaux, qui, dans le domaine de longueur d'onde choisi pour l'identification spectroscopique, n'ont pas de caractéristique spectrale et, à la longueur d'ondes d'excitation choisie, n'absorbent pas d'énergie laser injecté ou n'en absorbe que peu, l'épaisseur de la couche étant comprise entre environ 50 et 200 nm et la couche ayant une structure très lisse d'une rugosité < 1 µm.

2. Substrat support suivant la revendication 1, **caractérisé en ce que** la couche métallique est en Ni, Al, Pd, W, Fe, Ta, Rh, Cd, Cu, Au, Ag, In, Co, Sn, Si, Ge, Te, Se ou en un alliage de ces métaux.

3. Substrat support suivant la revendication 1 ou 2, **caractérisé en ce que** la couche métallique est obtenue par dépôt en phase vapeur.

4. Substrat support suivant l'une ou plusieurs des revendications précédentes, **caractérisé en ce que** la membrane filtrante est en polycarbonate, en téflon ou en acétate de cellulose.

5. Substrat support suivant l'une ou plusieurs des revendications précédentes, **caractérisé en ce que** la membrane filtrante a une dimension de pores définie d'environ 0,2 à 1,2 µm.

6. Substrat support suivant l'une ou plusieurs des revendications précédentes, **caractérisé en ce que** l'identification spectroscopique s'effectue par spectroscopie Raman.
